# FASCICULE DE BREVET EUROPEEN

(11) **EP 1 287 311 B1**
(45) Date de publication et mention de la délivrance du brevet: **26.11.2003**
(21) Numéro de dépôt: 01925662.7
(22) Date de dépôt: 13.04.2001
(51) Int. Cl.: G01B 11/24, G01B 11/02

(54) **DISPOSITIF D'ACQUISITION D'UNE FORME TRIDIMENSIONNELLE PAR VOIE OPTOELECTRONIQUE**
VORRICHTUNG ZUR OPTO-ELEKTRONISCHEN VERMESSUNG EINER DREIDIMENSIONALEN FORM
DEVICE FOR ACQUIRING A THREE-DIMENSIONAL SHAPE BY OPTOELECTRONIC PROCESS

(30) Priorité: 14.04.2000 FR 0004954
(43) Date de publication de la demande: 05.03.2003
(73) Titulaire: Cynovad, Inc., Saint-Laurent, Québec H4S 1V9 (CA)
(72) Inventeur: GUERN, Yves, F-13490 Jouques (FR)
(74) Mandataire: Ramey, Daniel
(86) Numéro de dépôt international: FR0101167
(87) Numéro de publication internationale: WO01079784

(56) Documents cités:
- EP-A- 0 267 705
- WO-A-96/41123
- WO-A-98/49522
- GB-A- 2 096 793

## Description

L'invention concerne un dispositif d'acquisition d'une forme tridimensionnelle par voie optoélectronique, du type décrit dans la demande antérieure WO-99/64816.

On connaît, par ce document, un dispositif d'acquisition de formes qui comprend des moyens d'éclairage comportant une source lumineuse polychromatique et une lentille chromatique associée éventuellement à un système optique de grandissement, des moyens de reprise de la lumière réfléchie ou rétro-diffusée par un objet éclairé, et des moyens d'analyse spectrale de la lumière reprise, associés à des moyens de traitement de l'information. Les moyens d'analyse spectrale sont sur l'axe optique des moyens de reprise de la lumière, tandis que les moyens d'éclairage sont décalés angulairement et éclairent l'objet au moyen d'une lame semi-transparente placée sur l'axe optique des moyens de reprise de la lumière.

Ce dispositif connu fonctionne de façon satisfaisante, avec une profondeur de mesure relativement importante et notablement supérieure à celle des dispositifs concurrents de la technique antérieure.

WO96/41123 et WO98/49522 présentent un dispositif d'acquisition de formes dans lequel un miroir est placé entre une fente d'éclairage et un système optique de façon décalée par rapport à l'axe optique afin de dévier la lumière vers des moyens d'analyse spectrale.

La présente invention a notamment pour but de perfectionner ce dispositif et d'améliorer ses performances.

Elle propose, à cet effet, un dispositif pour l'acquisition de la forme tridimensionnelle d'un objet par voie optoélectronique, comprenant une source lumineuse à spectre continu, une fente d'éclairage placée sur l'axe optique en aval de la source, un système optique de formation d'image sur l'objet, un système optique de reprise de la lumière réfléchie par l'objet, des moyens d'analyse spectrale de cette lumière et des moyens de traitement de l'information associés aux moyens d'analyse spectrale, caractérisé en ce que lesdits systèmes optiques de formation d'image et de reprise de la lumière sont confondus et formés par un même système optique chromatique et en ce que la lumière réfléchie par l'objet et sortant dudit système optique est interceptée par un miroir placé sur l'axe optique entre la fente d'éclairage et ledit système optique pour intercepter les rayons lumineux émis par la fente d'éclairage sur l'axe optique en direction de l'objet et est déviée par exemple perpendiculairement à l'axe optique vers une fente d'analyse placée sur l'axe des moyens d'analyse spectrale.

Le dispositif selon l'invention présente un certain nombre d'avantages par rapport à la technique connue :
- la profondeur de champ et la profondeur de mesure sont augmentées ;
- le dispositif est moins sensible aux longueurs d'ondes parasites et les mesures sont plus précises.

Le miroir précité, qui constitue un masque interceptant les rayons lumineux centraux, évite d'éclairer un point de la surface de l'objet par un ensemble de rayons lumineux de longueurs d'ondes différentes et facilite la détermination de la position de ce point le long de l'axe optique en l'éclairant avec une seule longueur d'onde.

De préférence, le système optique chromatique précité est afocal et un système optique de grandissement, de préférence afocal, est monté sur l'axe optique entre le système optique chromatique et l'objet éclairé.

Pour disposer d'une voie d'analyse télécentrique et réduire les zones d'ombre sur l'objet éclairé, l'invention prévoit de disposer un masque comprenant un trou circulaire sur l'axe optique pour le passage de la lumière réfléchie par l'objet, ce masque étant placé au centre du système optique chromatique précité et comprenant au moins deux orifices latéraux de passage de la lumière d'éclairage de l'objet.

Pour augmenter le rapport signal sur bruit et donc augmenter la précision de la mesure, ou le gain sur le signal lorsqu'il est faible, l'invention prévoit également de relier les sorties d'un ensemble matriciel de capteurs du type CCD ou analogues, faisant partie des moyens d'analyse spectrale, à des moyens de conversion analogique-numérique par un filtre passe-bas éliminant les bruits de fréquence élevée sur les signaux analogiques de sortie des capteurs.

Selon une autre caractéristique de l'invention, le dispositif comprend également des moyens optiques de rotation d'image, placés sur l'axe optique dans une zone traversée par la lumière d'éclairage de l'objet et par la lumière réfléchie par l'objet, ces moyens de rotation d'image étant par exemple un prisme de DOVE, qui peut être placé dans le système optique chromatique précité.

Par rotation de ce prisme autour de l'axe optique, on fait tourner autour de l'axe optique le profil de mesure sur l'objet éclairé. Cela permet un balayage en rotation de la surface éclairée de l'objet sans déplacement relatif entre le dispositif d'acquisition et l'objet éclairé, pour l'acquisition d'une forme tridimensionnelle dans un volume de mesure de forme cylindrique qui est défini par la rotation du profil de mesure autour de l'axe optique.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique globale d'un dispositif selon l'invention ;
- la figure 2 est une vue partielle simplifiée illustrant le fonctionnement de ce dispositif ;
- la figure 3 est une vue de face d'un masque utilisable pour l'obtention d'une voie d'analyse télécentrique ;
- la figure 4 est une vue de face d'une variante de réalisation de ce masque ;
- la figure 5 représente schématiquement la disposition d'un moyen optique de rotation d'image dans le dispositif selon l'invention.

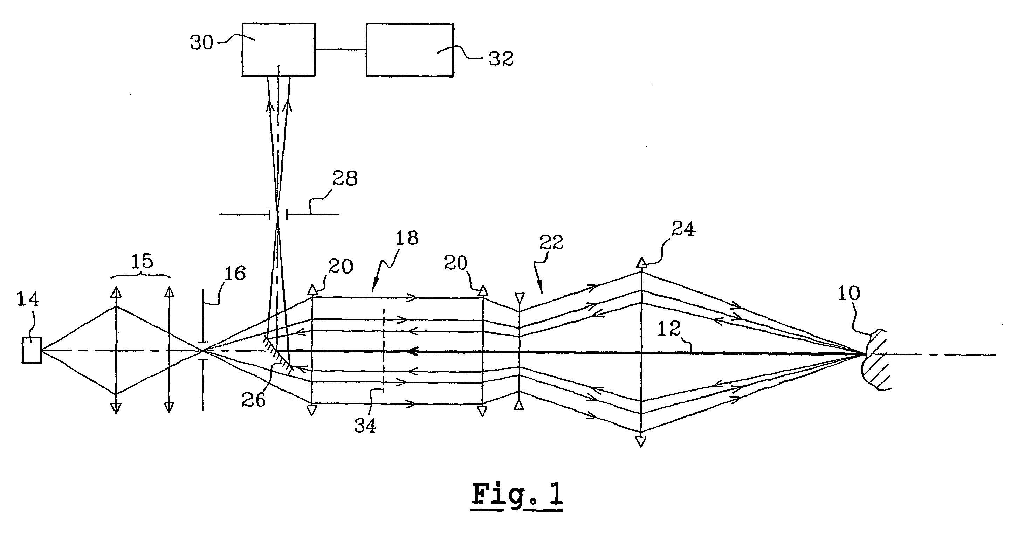

En figure 1, la référence 10 désigne un objet dont on veut acquérir la forme tridimensionnelle, cet objet étant placé sur l'axe optique 12 d'un dispositif selon l'invention, comprenant une source d'éclairage 14 à spectre continu, reliée par exemple par des fibres optiques au foyer d'un système optique 15 formant condenseur focalisant la lumière émise par la source 14 sur une fente d'éclairage 16 placée sur l'axe optique 12.

Cette fente 16 est suivie d'un système optique chromatique 18 qui est ici un système afocal, formé de deux lentilles chromatiques 20 identiques, la fente 16 se trouvant au foyer de la première lentille 20.

Ce système optique chromatique est suivi d'un système optique 22 de grandissement, avantageusement du type afocal.

L'objet éclairé 10 se trouve approximativement au foyer de la dernière lentille 24 du système optique de grandissement.

Le système optique chromatique 18 forme le système de reprise de la lumière réfléchie ou rétro-diffusée par la surface de l'objet 10 et un miroir de renvoi 26 est placé sur l'axe optique, entre la fente d'éclairage 16 et la première lentille 20 du système chromatique 18, pour dévier de préférence perpendiculairement à l'axe optique 12 la lumière reprise, en direction d'une fente d'analyse 28 placée sur l'axe optique de moyens 30 d'analyse spectrale qui sont associés à des moyens 32 de traitement de l'information.

Les moyens 30 d'analyse spectrale sont par exemple du type décrit dans la demande antérieure WO-99/64816 précitée.

Le dispositif qui vient d'être décrit présente l'avantage, par rapport à celui faisant l'objet de la demande antérieure précitée, de ne pas utiliser de lames semi-transparentes placées sur l'axe optique pour l'éclairage de l'objet et la reprise du flux lumineux réfléchi ou rétro-diffusé par l'objet, l'utilisation d'une lame semi-transparente se traduisant nécessairement par la perte d'une majeure partie du flux lumineux réfléchi ou rétro-diffusé par l'objet éclairé. Dans le dispositif selon l'invention représenté en figure 1, le gain sur le flux lumineux réfléchi ou rétro-diffusé par l'objet 10 est compris entre deux et quatre environ, par rapport à la réalisation décrite dans la demande antérieure précitée.

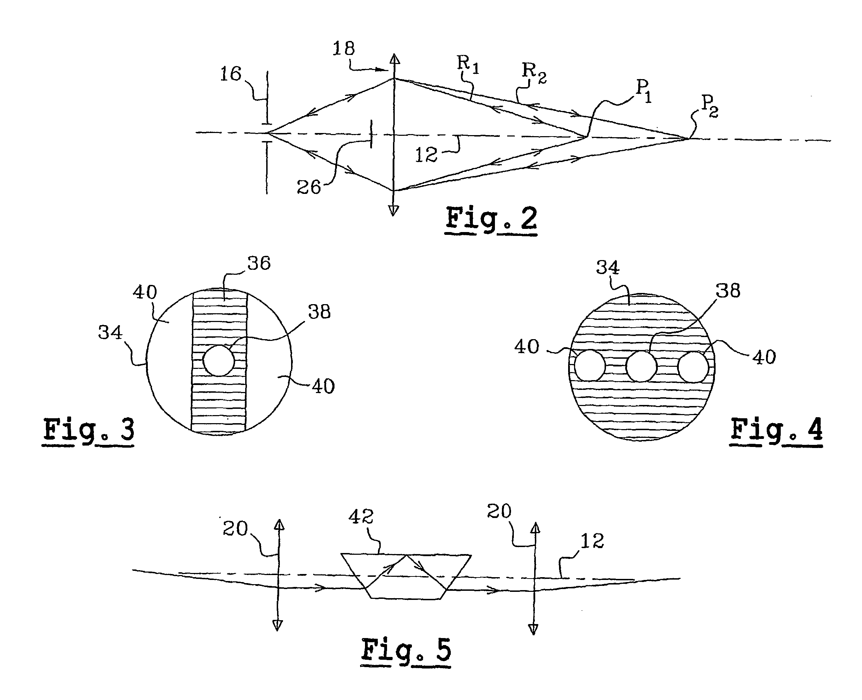

Un autre avantage du dispositif selon l'invention va maintenant être décrit en référence à la figure 2.

Dans cette figure, pour simplifier le dessin, on a représenté le système optique chromatique 18 sous forme d'une seule lentille et on a schématisé le miroir 26 sous forme d'un masque qui est placé sur l'axe optique 12 et qui intercepte les rayons lumineux centraux polychromatiques issus de la fente d'éclairage 16.

Comme le système optique 18 est un système chromatique dont la distance focale varie continuement avec la longueur d'onde, les différentes longueurs d'ondes issues de la fente d'éclairage 16 sont focalisées en des points différents sur l'axe optique 12. Par exemple, un rayon lumineux R1 de longueur d'onde λ1 est focalisé au point P1, et un rayon lumineux R2 de longueur d'onde λ2 supérieure à λ1 est focalisé sur l'axe 12 en un point P2 plus éloigné du système chromatique 18 que le point P1.

Si les longueurs d'onde des rayons R1 et R2 correspondent aux extrêmes de la bande de longueur d'onde d'éclairage, la distance P1-P2 sur l'axe optique 12 représente la profondeur de mesure.

Les rayons lumineux centraux issus de la fente d'éclairage 16 étant interceptés par le masque 26, on peut dire que le point P1 sur l'axe 12 sera éclairé uniquement ou presque uniquement par une lumière de longueur d'onde λ1, que le point P2 sera éclairé par une lumière de longueur d'onde λ2 et qu'un point Pi intermédiaire entre P1 et P2 sera éclairé par une lumière de longueur d'onde λi comprise entre λ1 et λ2.

Comme le système optique chromatique 18 forme le système optique de reprise de la lumière réfléchie ou rétro-diffusée par l'objet, les rayons lumineux de longueur d'onde λ1 réfléchis ou rétro-diffusés par le point P1 sont focalisés sur l'axe optique 12 au niveau de la fente d'éclairage 16, les rayons lumineux de longueur d'onde λ2 réfléchis ou rétro-diffusés par le point P2 sont également focalisés sur la fente d'éclairage 16 et, de même, les rayons lumineux de longueur d'onde λi réfléchis par le point intermédiaire Pi sont focalisés sur la fente d'éclairage 16.

Cela signifie qu'une image nette de tout point situé sur l'axe entre P1 et P2 peut être formée par le système chromatique 18 sur les moyens d'analyse spectrale, sans réglage du dispositif.

cela signifie également que, si une lumière parasite ayant une longueur d'onde différente de λ1 est réfléchie par le point P1, cette lumière parasite ne sera pas focalisée sur la fente d'éclairage 16 et une image nette du point P1 à la longueur d'onde ou aux longueurs d'onde de la lumière parasite ne sera pas formée sur les moyens d'analyse spectrale.

Le système optique chromatique 18 permet donc d'assurer un filtrage spectral de la lumière reprise tout en assurant la netteté de l'image formée sur les moyens d'analyse spectrale sur toute la profondeur de mesure utile, le long de l'axe optique 12, et les mesures réalisées sont plus précises. La fente d'analyse assure à la fois un filtrage spectral et un filtrage spatial de la lumière reprise.

Pour améliorer les performances du dispositif, en disposant d'une voie d'analyse télécentrique qui évite ou réduit les zones d'ombre sur l'objet éclairé 10, un masque 34 représenté en figure 3 est placé au centre du système optique chromatique 18, ce masque 34 comprenant une zone centrale 36 d'interception des rayons lumineux, formée avec un trou axial circulaire 38 laissant passer la lumière reprise, c'est-à-dire la lumière réfléchie ou rétro-diffusée par l'objet 10.

La lumière d'éclairage issue de la fente 16 passe de chaque côté de la bande centrale 36, comme indiqué en 40.

En variante, et comme représenté schématiquement en figure 4, ces zones 40 de passage de la lumière d'éclairage pourraient être réduites à des orifices circulaires formés dans un disque 34 comportant le trou central 38 de passage de la lumière reprise.

Avec le masque 34 de la figure 4, on dispose d'une voie d'éclairage verticalement télécentrique.

Comme déjà indiqué dans la demande antérieure WO-99/64816 précitée, dont le contenu est incorporé ici par référence, une image d'un profil de la surface éclairée de l'objet 10 peut être formée sur des moyens 30 d'analyse spectrale, qui comprennent une caméra matricielle de capteurs du type CCD ou analogues. Un balayage en rotation de la surface éclairée de l'objet 10 peut être réalisé au moyen d'un système optique de rotation d'image, tel qu'un prisme de DOVE placé dans le dispositif selon l'invention sur l'axe optique 12, dans une zone traversée à la fois par la lumière d'éclairage et par la lumière reprise. Par exemple et comme représenté en figure 5, le prisme de DOVE 42 peut être placé entre les deux lentilles 20 du système chromatique 18. La rotation du prisme de DOVE 42 autour de l'axe optique 12 a pour conséquence de faire tourner autour de cet axe le profil de mesure sur la surface éclairée de l'objet 12, la rotation du profil étant deux fois supérieure à celle du prisme. On peut ainsi obtenir, sans autre déplacement du dispositif selon l'invention ou de l'objet 10, une forme tridimensionnelle qui est celle de la surface de l'objet 10 éclairée par un cylindre lumineux d'axe 12 et dont le diamètre est égal à la longueur du profil de mesure.

Pour augmenter le rapport signal sur bruit des signaux de sortie des capteurs CCD de la caméra matricielle précitée, un filtre passe-bas est utilisé pour relier les sorties des capteurs à des moyens de conversion analogiques-numériques reliant les moyens 30 d'analyse spectrale aux moyens 32 de traitement de l'information. Typiquement, la fréquence de coupure de ce filtre passe-bas est d'environ 1 MHz.

Dans un exemple de réalisation du dispositif représenté en figure 1, les lentilles 20 du système chromatique 18 ont une longueur focale de 60 mm, la lentille 24 du système optique 22 de grandissement a une longueur focale de 150 mm, le rapport de grandissement transversal du système 22 est de 3, et la profondeur de mesure sur l'axe optique 12 est d'environ 40 mm. L'image formée sur les moyens d'analyse est nette sans réglage sur toute la profondeur de mesure (dans la technique antérieure, la plage de netteté de l'image est d'environ 4 mm de part et d'autre d'une position centrale correspondant à un réglage). De plus, la largeur spectrale du signal est environ deux fois plus petite dans le dispositif selon l'invention que dans la technique antérieure, et la précision est uniforme sur toute la profondeur de mesure (0,01%) au lieu d'avoir une variation en forme de cloche avec une dégradation progressive quand on s'éloigne de la position centrale.

## Revendications

1. Dispositif pour l'acquisition de la forme tridimensionnelle d'un objet par voie optoélectronique, comprenant une source lumineuse (14) à spectre continu, une fente d'éclairage (16) placée sur l'axe optique (12) en aval de la source (14), un système optique chromatique (18) de formation d'image sur l'objet (10) et de reprise de la lumière réfléchie par l'objet (10), des moyens (30) d'analyse spectrale de cette lumière et des moyens (32) de traitement de l'information associés aux moyens (30) d'analyse spectrale, un miroir pour intercepter la lumière réfléchie par l'objet (10) et sortant dudit système optique (18) et la dévier, par exemple perpendiculairement à l'axe optique (12), vers une fente d'analyse (28) placée sur l'axe optique des moyens (30) d'analyse spectrale **caractérisé en ce que** le miroir (26) est placé sur l'axe optique (12) entre la fente d'éclairage (16) et le système optique (18) pour intercepter les rayons lumineux issus de la fente d'éclairage (16) sur l'axe optique (12) en direction de l'objet (10).

2. Dispositif selon la revendication 1, **caractérisé en ce que** le système optique chromatique (18) est afocal.

3. Dispositif selon la revendication 1 ou 2, **caractérisé en ce que** le système optique chromatique (18) est formé de deux lentilles chromatiques identiques (20).

4. Dispositif selon l'une des revendications précédentes, **caractérisé en ce qu'**un système optique grandisseur (22) est monté sur l'axe optique (12) entre le système optique chromatique (18) et l'objet (10) .

5. Dispositif selon la revendication 4, **caractérisé en ce que** le système optique grandisseur (22) est afocal.

6. Dispositif selon l'une des revendications précédentes, **caractérisé en ce qu'**un masque (34) comprenant un trou circulaire axial (38) pour le passage de la lumière réfléchie par l'objet (10) et deux orifices (40) de passage de la lumière d'éclairage de l'objet (10), est placé au centre du système optique chromatique (18).

7. Dispositif selon l'une des revendications précédentes, **caractérisé en ce que** les moyens (30) d'analyse spectrale comprennent un ensemble matriciel de capteurs du type CCD ou analogue, dont les sorties sont reliées à des moyens de conversion analogique-numérique par un filtre passe-bas.

8. Dispositif selon l'une des revendications précédentes, **caractérisé en ce qu'**il comprend des moyens optiques (42) de rotation d'image, placés sur l'axe optique (12) dans une zone traversée par la lumière d'éclairage de l'objet et par la lumière réfléchie par l'objet.

9. Dispositif selon la revendication 8, **caractérisé en ce que** les moyens optiques de rotation d'image sont un prisme de DOVE (42), placé par exemple dans le système optique chromatique (18) précité.

## Patentansprüche

1. Vorrichtung zur opto-elektronischen Vermessung der dreidimensionalen Form eines Objekts auf opto-elektronischen Wege, mit einer Lichtquelle (14) mit einem kontinuierlichen Spektrum, einem hinter der Quelle (14) auf der optischen Achse (12) angeordneten Beleuchtungsspalt (16), einem chromatischen optischen System (18) zur Abbildung des Bilds auf dem Objekt (10) und Wiederaufnahme des durch das Objekt (10) reflektierten Lichts, Mitteln (30) zur Spektralanalyse dieses Lichts und Mitteln (32) zur Verarbeitung der mit den Mitteln (30) zur Spektralanalyse verbundenen Information, einem Spiegel, um das durch das Objekt (10) reflektierte und aus dem genannten optischen System (18) austretende Licht abzufangen und es, z.B. im rechten Winkel zur optischen Achse (12), auf einen auf der optischen Achse der Mittel (30) zur Spektralanalyse angeordneten Analysespalt (28) abzulenken, **dadurch gekennzeichnet, dass** der Spiegel (26) auf der optischen Achse (12) zwischen dem Beleuchtungsspalt (16) und dem optischen System (18) angeordnet ist, um die vom Beleuchtungsspalt (16) stammenden Lichtstrahlen auf der optischen Achse (12) in Richtung auf das Objekt (10) abzufangen.

2. Vorrichtung gemäß Anspruch 1, **dadurch gekennzeichnet, dass** das chromatische optische System (18) brennpunktlos ist.

3. Vorrichtung gemäß Ansprüchen 1 oder 2, **dadurch gekennzeichnet, dass** das chromatische optische System (18) von zwei identischen chromatischen Linsen (20) gebildet wird.

4. Vorrichtung gemäß einem der vorhergehenden Ansprüche, **dadurch gekennzeichnet, dass** ein optisches Vergrößerungssystem (22) auf der optischen Achse (12) zwischen dem chromatischen optischen System (18) und dem Objekt (10) angebracht ist.

5. Vorrichtung gemäß Anspruch 4, **dadurch gekennzeichnet, dass** das optische Vergrößerungssystem (22) brennpunktlos ist.

6. Vorrichtung gemäß einem der vorhergehenden Ansprüche, **dadurch gekennzeichnet, dass** eine Blende (34), die ein axiales kreisrundes Loch (38) für den Durchgang des vom Objekt (10) reflektierten Lichts und zwei Öffnungen (40) für den Durchgang des Lichts zur Beleuchtung des Objekts (10) aufweist, in der Mitte des chromatischen optischen Systems (18) angeordnet ist.

7. Vorrichtung gemäß einem der vorhergehenden Ansprüche, **dadurch gekennzeichnet, dass** die Mittel (30) zur Spektralanalyse ein Matrizenensemble von Detektoren des Typs CCD oder ähnliches aufweisen, deren Ausgänge mit den Mitteln zur Analog-Digital-Wandlung über einen Tiefpassfilter verbunden sind.

8. Vorrichtung gemäß einem der vorhergehenden Ansprüche, **dadurch gekennzeichnet, dass** sie optische Mittel (42) zur Rotation des Bildes umfasst, die auf der optischen Achse (12) in einem vom Licht zur Beleuchtung des Objekts und vom Objekt reflektierten Licht durchlaufenen Gebiet angeordnet sind.

9. Vorrichtung gemäß Anspruch 8, **dadurch gekennzeichnet, dass** die optischen Mittel zur Rotation des Bildes ein DOVE Prisma (42) sind, das z.B. im obengenannten chromatischen optischen System (18) angeordnet ist.

## Claims

1. An apparatus for opto-electronically acquiring the three dimensional shape of an object, the apparatus comprising a continuous spectrum light source (14), an illumination slot (16) on the optical axis (12) downstream of the source (14), an optical chromatic system (18) forming an image on the object (10) and receiving the light reflected by the object (10), spectral analysis means (30) for analyzing the reflected light and data processing means (32) coupled to the spectral analysis means (30), a mirror for intersecting the light reflected by the object (10) and output from the optical system (18) and for deviating it, for example perpendicularly to the optical axis (12), towards an analysis slot placed on the optical axis of the spectral analysis means (30), **characterized in that** the mirror (26) is placed on the optical axis (12) between the illumination slot (16) and the optical system (18) for intersecting the light rays output from the illumination slot (16) on the optical axis (12) in the direction of the object (10).

2. An apparatus according to claim 1, **characterized in that** the optical chromatic system (18) is afocal.

3. An apparatus according to claim 1 or 2, **characterized in that** the optical chromatic system (18) comprises two identical chromatic lenses (20).

4. An apparatus according to one of the preceding claims, **characterized in that** an optical magnifying system (22) is mounted on the optical axis (12) between the optical chromatic system (18) and the object (10).

5. An apparatus according to claim 4, **characterized in that** the optical magnifying system (22) is afocal.

6. An apparatus according to one of the preceding claims, **characterized in that** a mask (34) comprising a circular axial hole (38) for passing light reflected by the object (10) and two orifices (40) for passing light illuminating the object (10), is placed at the center of the optical chromatic system (18).

7. An apparatus according to one of the preceding claims, **characterized in that** the spectral analysis means (30) comprise a matrix assembly of sensors of CCD type or analog, whose outputs are connected to means for analog to digital conversion via a low pass filter.

8. An apparatus according to one of the preceding claims, **characterized in that** it further comprises optical image rotation means (42) placed on the optical axis (12) in an area intersected by light illuminating the object and by light reflected from the object.

9. An apparatus according to claim 8, **characterized in that** the optical image rotation means comprise a DOVE prism (42) placed, for example, in the said optical chromatic system.
